# EUROPÄISCHE PATENTSCHRIFT

(11) **EP 3 762 163 B1**
(45) Veröffentlichungstag und Bekanntmachung des Hinweises auf die Patenterteilung: **26.01.2022**
(21) Anmeldenummer: 19721555.1
(22) Anmeldetag: 18.04.2019
(51) Int. Cl.: B21D 53/10, B21D 22/16, F01L 3/14, B23P 15/00

(54) **VERFAHREN ZUR HERSTELLUNG EINES HOHLVENTILS MIT OPTIMIERTER SCHAFTINNENGEOMETRIE FÜR VERBRENNUNGSMOTOREN**
METHOD FOR PRODUCING A HOLLOW VALVE HAVING OPTIMISED SHAFT INNER GEOMETRY FOR COMBUSTION ENGINES
PROCÉDÉ DE FABRICATION D'UNE SOUPAPE À TIGE CREUSE DONT LA TIGE A UNE GÉOMÉTRIE INTERNE OPTIMISÉE, POUR DES MOTEURS À COMBUSTION INTERNE

(30) Priorität: 23.05.2018 DE 102018112295
(43) Veröffentlichungstag der Anmeldung: 13.01.2021
(73) Patentinhaber: Federal-Mogul Valvetrain GmbH, 30890 Barsinghausen (DE)
(72) Erfinder: MATTHIAS, Thorsten, 30826 Garbsen (DE); WOLKING, Antonius, 30890 Barsinghausen (DE); BAYARD, Guido, 45731 Waltrop (DE)
(74) Vertreter: Kurig, Thomas
(86) Internationale Anmeldenummer: PCT/EP2019/060103
(87) Internationale Veröffentlichungsnummer: WO 2019/223941

(56) Entgegenhaltungen:
- DE-A1-102015 118 495
- DE-A1-102015 220 891
- JP-A- 2014 084 725
- JI HONGCHAO ET AL: "Cross-wedge rolling of a 4Cr9Si2 hollow valve: explorative experiment and finite element simulation", THE INTERNATIONAL JOURNAL OF ADVANCED MANUFACTURING TECHNOLOGY, SPRINGER, LONDON, vol. 77, no. 1, 10 October 2014 (2014-10-10), pages 15-26, XP035457996, ISSN: 0268-3768, DOI: 10.1007/S00170-014-6363-9 [retrieved on 2014-10-10]

## Beschreibung

### Gebiet der Erfindung

Die vorliegende Erfindung betrifft ein Verfahren zur Herstellung von Hohlventilen, bzw. Hohlraumventilen, für Verbrennungsmotoren.

### Stand der Technik

Ein- und Auslassventile sind bei Verbrennungsmotoren thermisch und mechanisch hoch beanspruchte Bauteile. Eine ausreichende Kühlung ist daher notwendig, um eine dauerhafte Funktionsfähigkeit der Ventile sicherzustellen. Hierbei sind Hohltellerventile gegenüber Vollschaftventilen und Hohlschaftventilen (d.h. ein Hohlventil bei dem lediglich im Schaft ein Hohlraum vorgesehen ist) vorteilhaft, da ein Hohlraum sowohl im Schaft als auch im Ventilkopf vorhanden ist, wodurch eine verbesserte interne Kühlung - mittels eines Kühlmediums, z.B. Natrium - erzielt werden kann. Weitere Vorteile sind ein geringeres Gewicht, die Vermeidung von Hot-Spots und eine CO₂-Reduzierung. Die Kühlung kann weiter verbessert werden, indem die Schaftinnengeometrie mittels einer Strukturierung optimiert wird, um den Wärmetransport sowohl innerhalb des Hohlraums, d.h. durch eine sich darin befindliches Kühlmedium, als auch zwischen Ventilwand und Kühlmedium zu erhöhen. Bekannt ist hier z.B. die Verwendung von Einsätzen, die über die gebohrte Tellerfläche in den Schaft eingesetzt werden; vgl. DE 10057192 B4.

Hergestellt werden Hohlventile üblicherweise durch eine Kombination verschiedener Verfahren, wie z.B. Schmieden, Drehen und Schweißen. Hierbei ist insbesondere das Drehen oder Fräsen des Hohlraumes kostenintensiv. Auch sollten Schweißpunkte an der Tellerfläche oder an anderen betriebsbedingt kritischen Stellen vermieden werden. Ein weiterer Nachteil bekannter Verfahren ist, dass oftmals eine große Anzahl von Prozessschritten notwendig ist. Beispielsweise betrifft die EP 0898055 A1 ein Hohltellerventil, das durch Schließen eines hohlen Rohlings mittels Schweißens hergestellt wird.

DE 102015118495 A1 offenbart ein Verfahren zu Herstellung eines aus Metall bestehenden Ventilstößels umfassend Bereitstellen eines Rohlings, spanloses Verformen des Rohlings und Durchmesserreduzierung eines Hohlschafts bei gleichzeitiger axialer Streckung mittels mindestens einer relativ zum Hohlschaft konzentrisch rotierenden Drückrolle. JP 2014084725 A offenbart die Herstellung eines Hohlventils mittels Rundkneten, wobei der Ventilschaft eine Innenstrukturierung aufweist.

Aufgabe der vorliegenden Erfindung ist es also ein Herstellungsverfahren für Hohlventile, bzw. für einen Ventilkörper für Hohlventile, mit optimierter Schaftinnengeometrie bereitzustellen, welches die genannten Nachteile nicht aufweist und gleichzeitig eine hohe Produktivität und gute Materialausnutzung aufweist.

### Zusammenfassung der Erfindung

Erfindungsgemäß wird das Problem gelöst durch ein Verfahren zur Herstellung eines Ventilkörpers eines Hohlventils mit optimierter Schaftinnengeometrie gemäß den Merkmalen des angehängten Anspruchs 1; wobei das Verfahren zur Herstellung eines Ventilkörpers eines Hohlventils die Schritte umfasst von: Bereitstellen einer Vorform mit einem Ventilkopf und einer rohrförmigen Wand, die einen zylindrischen Hohlraum umgibt; Drückwalzen der rohrförmigen Wand über einem eine Oberflächenstrukturierung aufweisenden Strukturierdorn, der in den Hohlraum eingesetzt ist, um eine Länge der rohrförmigen Wand zu vergrößern.

Weiterhin ist als nicht beanspruchtes Beispiel ein Verfahren zur Herstellung eines Ventilkörpers eines Hohlventils mit optimierter Schaftinnengeometrie offenbart; wobei das Verfahren zur Herstellung eines Ventilkörpers eines Hohlventils mit optimierter Schaftinnengeometrie die Schritte umfasst von: Bereitstellen einer Vorform mit einem Ventilkopf und einer rohrförmigen Wand, die einen zylindrischen Hohlraum umgibt; Drückwalzen der rohrförmigen Wand über einem Drückwalzdorn, der in den Hohlraum eingesetzt ist, um eine Länge der rohrförmigen Wand zu vergrößern; und Reduzieren eines Außendurchmessers der rohrförmigen Wand durch Rundkneten oder Abstreckgleitziehen über einem eine

Oberflächenstrukturierung aufweisenden Strukturierdorn.

Gemäß einem Aspekt der vorliegenden Erfindung kann das Bereitstellen der Vorform umfassen: Bereitstellen eines napfförmigen Halbzeugs, wobei das Halbzeug die rohrförmige Wand, die den zylindrischen Hohlraum des Halbzeugs umgibt, und einen Bodenabschnitt aufweist; und Formen des Ventilkopfes aus dem Bodenabschnitt.

Gemäß einem weiteren Aspekt kann das Bereitstellen des napfförmigen Halbzeugs umfassen: Bereitstellen eines zumindest teilweise zylindrischen Rohlings; und Formen des napfförmigen Halbzeugs aus dem Rohling.

Gemäß einem weiteren Aspekt kann das Formen des napfförmigen Halbzeugs durch Fließpressen oder Schmieden erfolgen.

Gemäß einem weiteren Aspekt kann das Formen des Ventilkopfes durch Fließpressen oder Schmieden erfolgen.

Gemäß einem weiteren Aspekt können beim Drückwalzen mehrere Drückwalzen verwendet werden, wobei bevorzugt drei Drückwalzen verwendet werden.

Gemäß einem weiteren Aspekt können die mehreren Drückwalzen während des Drückwalzens zueinander radial und axial versetzt sein.

Gemäß einem weiteren Aspekt kann das Verfahren weiterhin umfassen: Reduzieren eines Außendurchmessers der rohrförmigen Wand ohne Dorn.

Gemäß einem weiteren Aspekt kann das Reduzieren des Außendurchmessers der rohrförmigen Wand durch Rundkneten oder Einziehen erfolgen.

Gemäß einem weiteren Aspekt kann die Oberflächenstrukturierung des Strukturierdorns in Form von Rillen vorliegen.

Gemäß einem weiteren Aspekt kann eine Tiefe der Rillen ausgehend vom am Ventilkopf gelegenen Ende des Strukturierdorns in axialer Richtung zunehmen.

Gemäß einem weiteren Aspekt kann die Oberflächenstrukturierung die Oberfläche des Strukturierdorns um 30% bis 100%, bevorzugt 50% bis 70%, gegenüber einer Mantelfläche eines Kreiszylinders mit einem Durchmesser, der einem mittleren Durchmesser des Strukturierdorns gleicht, vergrößern.

Gemäß einem weiteren Aspekt können sich die durch die Oberflächenstrukturierung des Strukturierdorns in die rohrförmige Wand eingeprägten Vertiefungen bis zu einer Tiefe erstrecken, die 10% bis 30% einer Gesamtwanddicke der rohrförmigen Wand entspricht. Gemäß einem weiteren Aspekt kann das Verfahren weiterhin umfassen: Einfüllen eines Kühlmediums, insbesondere Natrium, in den Hohlraum; und Schließen des Hohlraums.

### Kurze Beschreibung der Zeichnung

Im Folgenden werden beispielhafte Ausführungsformen der Erfindung unter Bezug auf die
Figuren genauer beschrieben, wobei
Figuren 1A - 1F verschiedene Zwischenschritte der erfindungsgemäßen Herstellung eines Ventilkörpers eines Hohlventils (dargestellt in Fig. 1D bzw. Fig. 1F) aus einem Rohling (dargestellt in Fig. 1A) zeigen;
Fig. 2 eine Schnittansicht während des Drückwalzens zeigt;
Fig. 3A eine Schnittansicht eines Ventilschafts eines erfindungsgemäß hergestellten Ventilkörpers zeigt;
Fig. 3B eine teilweise Abwicklung der Innenfläche des Ventilschafts der in Fig. 3A dargestellten Ausführungsform zeigt; und
Figuren 4A - 4C teilweise Abwicklungen der Innenfläche des jeweiligen Ventilschafts weiterer erfindungsgemäßer Ausführungsformen zeigen.

Im Folgenden werden sowohl in der Beschreibung als auch in der Zeichnung gleiche Bezugszeichen für gleiche oder ähnliche Elemente oder Komponenten verwendet. Es ist zudem eine Bezugszeichenliste angegeben, die für alle Figuren gültig ist. Die in den Figuren dargestellten Ausführungen sind lediglich schematisch und stellen nicht notwendigerweise die tatsächlichen Größenverhältnisse dar.

### Ausführliche Beschreibung der Erfindung

Bei der Herstellung eines Hohlventils, bzw. eines Ventilkörpers für ein Hohlventil, wird erfindungsgemäß entweder beim Drückwalzen oder beim Reduzieren des Außendurchmessers der rohrförmigen Wand ein Drückwalzdorn/Dorn mit strukturierter Oberfläche verwendet, um eine optimierte Schaftinnengeometrie zu erzeugen. Ein solcher mit einer Oberflächenstrukturierung versehener Drückwalzdorn bzw. Dorn wird im Rahmen dieser Anmeldung (bei beiden Alternativen) als "Strukturierdorn" bezeichnet.

Die "optimierte Schaftinnengeometrie" besteht also aus einer in die Innenoberfläche (Innenfläche) des Ventilschafts eingeprägten Oberflächenstrukturierung, die Vertiefungen bzw. Erhebungen aufweist. Diese Oberflächenstrukturierung vergrößert die Oberfläche, d.h. den Flächeninhalt, der Innenfläche des Ventilschafts; der Wärmeaustausch zwischen einem gegebenenfalls in den Hohlraum eingefüllten Kühlmedium und der Wand des Ventilschafts wird also verbessert und somit wird die Kühlung des letztendlichen Hohlventils erleichtert. Die die Oberflächenstrukturierung des Strukturierdorns ist bevorzugt so, dass die Oberfläche (d.h. deren Flächeninhalt) des Strukturierdorns um 30% bis 100%, bevorzugt um 50% bis 70%, gegenüber einer Mantelfläche eines Kreiszylinders mit einem Durchmesser, der einem mittleren Durchmesser des Strukturierdorns gleicht, vergrößert ist. Die komplementäre Innenfläche des Ventilschafts wird entsprechend vergrößert, d.h. um den gleichen Betrag.

Bevorzugt weist die Oberflächenstrukturierung des Strukturierdorns (sowohl eines beim Drückwalzen verwendeten als auch eines beim Reduzieren des Außendurchmessers verwendeten strukturierten Dorns) die Form von, zumindest teilweise in Längsrichtung verlaufenden, Rillen auf, wobei eine Tiefe der Rillen bevorzugt in axialer Richtung (Längsrichtung, siehe unten) ausgehend vom während des Verfahrensschrittes am Ventilkopf befindlichen Ende des Strukturierdorns zunimmt. Weiterhin ist die Oberflächenstrukturierung des Strukturierdorns bevorzugt so, dass die in die rohrförmige Wand eingeprägten Vertiefungen sich bis zu einer Tiefe erstrecken, die 10% bis 30% einer Gesamtwanddicke der rohrförmigen Wand entspricht.

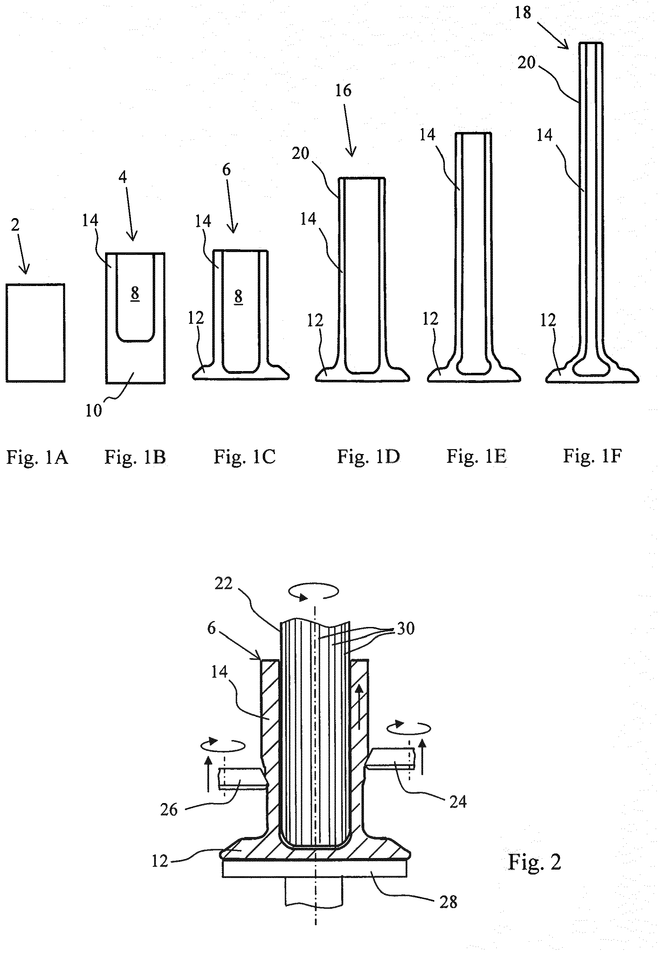

In den Figuren 1A bis 1F sind, in Schnittansichten, verschiedene Zwischenstufen des erfindungsgemäßen Herstellungsverfahrens dargestellt, wobei auch optionale bzw. bevorzugte Herstellungsschritte/Zwischenstufen dargestellt sind.

Bevorzugt dient als Ausgangspunkt, siehe Fig. 1A, ein Rohling 2 aus einem dem Fachmann bekannten Ventilstahl. Der Rohling weist eine zumindest teilweise zylindrische Form auf, bevorzugt eine kreiszylindrische Form, entsprechend der Kreisform des herzustellenden Ventilkörpers bzw. Ventils.

Der Rohling 2 wird in ein in Fig. 1B dargestelltes napfförmiges Halbzeug (Werkstück) 4 umgeformt. Das Halbzeug 4 in Form eines Napfes umfasst einen Bodenabschnitt 10, aus dem später ein Ventilkopf (Ventilteller) 12 gebildet wird, und eine rohrförmige Wand (ringförmige Wand) 14, die einen zylindrischen, bevorzugt kreiszylindrischen, Hohlraum 8 des napfförmigen Halbzeugs 4 umgibt und aus der später ein Ventilschaft 20 gebildet wird. Hierbei kann während der nachfolgenden Umformschritte eventuell Material zwischen Bodenabschnitt 10 und rohrförmiger Wand 14 fließen. Allgemeiner wird erfindungsgemäß das napfförmige Halbzeug 4 direkt bereitgestellt; das Verfahren startet dann also mit Bereitstellen des in Fig. 1B dargestellten napfförmigen Halbzeugs 4.

In einem anschließenden Umformschritt wird aus dem Bodenabschnitt 10 der Ventilkopf 12 geformt. Eine dadurch erhaltene Vorform 6 des Ventilkörpers ist in Fig. 1C dargestellt. Im Allgemeinen kann die Vorform 6 direkt bereitgestellt werden.

Sowohl das Umformen des Rohlings 2 in ein napfförmiges Werkstück 4 als auch das Formen des Ventilkopfs 12 aus dem Bodenabschnitt 10 kann z.B. durch ein Warm- oder Kaltumformverfahren durchgeführt werden. Bevorzugt wird Fließpressen oder Schmieden verwendet. Beim Fließpressen wird ein Stempel in den Rohling 2 bzw. das Halbzeug 4 gepresst, um den Hohlraum 8 bzw. den Ventilkopf 12 zu formen, d.h. es handelt sich im Wesentlichen um (Napf-)Rückwärtspressfließen bzw. Querfließpressen. Die Vorform 6 kann auch in einem einzigen Umformschritt, z.B. Schmieden oder Fließpressen, direkt aus dem Rohling 2 geformt werden.

Im nächsten Bearbeitungsschritt, von Fig. 1C nach Fig. 1D, wird eine axiale Länge der rohrförmigen Wand 14 vergrößert. 'Axial' bezieht sich hier auf die durch die rohrförmige Wand 14 (d.h. den späteren Schaft) definierte Richtung, also auf die (Mittel-)Achse der rohrförmigen Wand; 'radial' ist entsprechend eine Richtung orthogonal zur axialen Richtung. Eine Länge der rohrförmigen Wand 6 wird also in axialer Richtung (Längsrichtung) gemessen.

Hierzu wird erfindungsgemäß Drückwalzen bzw. Zylinderdrückwalzen über einem Drückwalzdorn 22 durchgeführt; vgl. Fig. 2. Beim Drückwalzen rotiert die Vorform und es wird mindestens eine, durch Reibschluss mitrotierende, Drückwalze 24, 26 gegen die Außenseite der rohrförmigen Wand 14 gedrückt und in axialer Richtung bewegt, so dass es zu einer plastischen Formänderung kommt. Die damit einhergehende inkrementelle Umformung führt zu einer vorteilhaften Kaltverfestigung des bearbeiteten Stahls. Insgesamt verringert sich die Wanddicke der rohrförmigen Wand während sich gleichzeitig die axiale Länge der rohrförmigen Wand vergrößert. Die mindestens eine Drückwalze wird gegebenenfalls mehrmals in axialer Richtung verfahren bis die gewünschte Längenzunahme bzw. Wanddickenverringenmg erreicht ist. Dabei wird der radiale Abstand der mindestens einen Drückwalze von der Achse der rohrförmigen Wand bei aufeinanderfolgenden Durchgängen sukzessive verringert.

Das Drückwalzen führt also, aufgrund des eingesetzten Drückwalzdorns, im Wesentlichen zu einer Längung der rohrförmigen Wand 14, wobei deren Außendurchmesser ein wenig abnimmt, entsprechend der Abnahme der Wanddicke. Falls eine größere Abnahme des Außendurchmessers erwünscht ist, kann auch ein Drückwalzen, ohne Drückwalzdorn erfolgen.

Wenn die erfindungsgemäße Schaftinnengeometrie während des Drückwalzens erzeugt werden soll, weist der Drückwalzdorn 22 an seiner (Umfangs-)Oberfläche eine (dreidimensionalen) Strukturierung in Form von Erhebungen bzw. Vertiefungen auf, um beim Drückwalzen der Innenoberfläche der rohrförmigen Wand 14 eine Strukturierung einzuprägen, die zur Oberflächenstrukturierung des Drückwalzdorns komplementär ist. Beim Drückwalzdorn handelt es sich dann also um einen Strukturierdorn.

Falls Abmessungen der Vorform 6 und Parameter des Drückwalzens so gewählt sind, dass die durch das Drückwalzen erreichte Länge der rohrförmigen Wand 14, der durch das Drückwalzen erreichte Außendurchmesser und ein Innendurchmesser der rohrförmigen Wand 14 der Vorform (der einem Durchmesser des Drückwalzdorns entspricht) den gewünschten Abmessungen des herzustellenden Hohlventils entsprechen, kann auf diese Weise ein Ventilkörper 16 für ein Hohlschaftventil erhalten werden (vg1. Fig. 1D, wobei angemerkt sei, dass die in den Figuren gezeigten relativen Abmessungen nicht den tatsächlichen relativen Abmessungen entsprechen müssen, insbesondere ist in Fig. 1D der Durchmesser des Ventiltellers/-kopfes im Verhältnis zum Schaftdurchmesser kleiner als bei einem üblichen tatsächlichen Ventil dargestellt, ebenso ist der Schaftdurchmesser im Verhältnis zur Länge des Schaftes 20 größer als üblich dargestellt). In diesem Fall wird ein Drückwalzdorn mit Oberflächenstrukturierung, d.h. ein Strukturierdorn, beim Drückwalzen verwendet, vgl. Fig. 2.

Anschließend (von Fig. 1D über Fig. 1E nach Fig. 1F) wird, optional, der Außendurchmesser der rohrförmigen Wand 14 reduziert, um einen fertiggestellten Ventilkörper 18 für ein Hohltellerventil zu erhalten, dessen Ventilschaft 20 einen vorbestimmten Außendurchmesser aufweist, d.h. einen gewünschten Zieldurchmesser aufweist; vgl. Fig. 1F. Dieser Umformschritt erfolgt bevorzugt ohne eingesetzten Dorn, damit der Durchmesser effektiv verkleinert werden kann. Dieser Schritt führt, neben einer Verringerung des Außendurchmessers, auch zu einer weiteren Längung der rohrförmigen Wand 14 und, falls ohne Dorn durchgeführt, zu einer Zunahme der Wanddicke der rohrförmigen Wand 14. Die Wanddicke wäre also gegebenenfalls im vorhergehenden Drückwalzschritt etwas kleiner einzustellen, um unter Berücksichtigung der Dickenzunahme im abschließenden Schritt eine bestimmte Wanddicke, und damit bei gegebenen Außendurchmesser D einen bestimmten Innendurchmesser, zu erhalten. Wurde beim Drückwalzen ein Strukturierdorn verwendet, sollte das Reduzieren des Außendurchmessers der ringförmigen Wand 14 ohne Dorn erfolgen.

Das Reduzieren des Außendurchmessers der rohrförmigen Wand 14 kann durch Rundkneten oder Einziehen ("Necking", Durchmesserverminderung durch Einschnüren) erfolgen, wobei Rundkneten bevorzugt wird. Ebenso ist es möglich, den Außendurchmesser der rohrförmigen Wand 14 durch Abstreckgleitziehen über einem Dorn, insbesondere einem Strukturierdorn, zu reduzieren. Bevorzugt ist die Verwendung von Rundkneten.

Beim Rundkneten ist wichtig, dass nach dem Rundkneten zur Reduzierung des Außendurchmessers der rohrförmigen Wand 14 kein weiterer Umformschritt des Ventilkörpers 18 für ein Hohltellerventil stattfindet, da dies die durch das Rundkneten erhaltenen positiven Materialeigenschaften verschlechtern würde. Rundkneten ist also in diesem Fall der abschließende Umformschritt. Beim Rundkneten handelt es sich um ein inkrementelles Druckumformverfahren, bei dem in schneller Abfolge von verschiedenen Seiten in radialer Richtung auf das zu bearbeitende Werkstück eingehämmert wird. Durch den dadurch entstehenden Druck 'fließt' das Material sozusagen und die Materialstruktur wird nicht durch Zugspannungen verzerrt. Bevorzugt wird Rundkneten als Kaltumformverfahren, d.h. unterhalb der Rekristallisationstemperatur des bearbeiteten Materials, ausgeführt. Wesentlicher Vorteil der Verwendung von Rundkneten als abschließenden Umformschritt ist also, dass beim Rundkneten durch die radiale Krafteinleitung Druckspannungen induziert werden, wodurch das Auftreten von Zugspannungen, welche die Anfälligkeit für Risse erhöhen verhindert wird, insbesondere trifft dies für die Randschichten des Hohlschaftes zu. Das Rundkneten wirkt somit mit dem vorhergehenden, ebenfalls inkrementellen Umformverfahren des Drückwalzens auf vorteilhafte Weise zusammen, so dass optimale Materialeigenschaften, z.B. Festigkeit, erreicht werden.

Weitere Vorteile des Rundknetens als abschließenden Umformschritt - gegenüber Ziehverfahren oder "Necking" (Einziehen) - sind durch eine bessere erreichbare Oberflächenqualität und durch eine relativ höhere Durchmesserreduzierung des Schaftes je Schritt gegeben. Aufgrund der hohen erreichbaren Oberflächenqualität und dadurch, dass die einhaltbaren Toleranzen beim Rundkneten sehr klein sind, ist eine Nachbearbeitung des Ventilschaftes meist nicht notwendig. Mit Freiformverfahren bzw. Stauchverfahren - wie z.B. Necking - lässt sich im Allgemeinen nur eine schlechtere Oberflächenqualität bzw. Toleranzeinhaltung erreichen. Dementsprechend sollte nach dem Rundkneten zur Reduzierung des Außendurchmessers der rohrförmigen Wand insbesondere kein weiterer Verfahrensschritt mittels eines Ziehverfahrens oder Neckings erfolgen.

Das Reduzieren des Außendurchmessers kann in mehreren Teilschritten erfolgen (ein Zwischenschritt ist beispielsweise in Fig. 1E dargestellt), wobei die einzelnen Teilschritte jeweils wahlweise mit oder ohne Dorn erfolgen können (zu Beginn eines Teilschritts kann der Durchmesser eines Dorns kleiner als der Durchmesser des Hohlraums sein); auch kann ein Durchmesser der Dorne aufeinanderfolgender Teilschritte verringert werden.

Wenn der Drückwalzdorn nicht strukturiert ist und die erfindungsgemäße Schaftinnengeometrie während des Reduzierens des Außendurchmessers erzeugt werden soll, wird beim Reduzieren des Außendurchmessers ein Strukturierdorn verwendet, der an seiner (Umfangs-)Oberfläche (dreidimensional) mit Erhebungen bzw. Vertiefungen strukturiert ist, um die Strukturierung der Innenoberfläche des Ventilschafts einzuprägen. Bei dem beim Außendurchmesser-Reduzieren verwendeten Dorn handelt es sich in diesem Fall also um einen Strukturierdorn. In diesem Fall wird Rundkneten oder Abstreckgleitziehen als Verfahren zur Durchmesserreduzierung verwendet. Werden mehrere Dorne verwendet, so sollte der zuletzt verwendete Dorn ein Strukturierdorn (Dorn mit strukturierter Oberfläche) sein.

Um den Herstellungsprozess des Ventilkörpers eines Hohlventils abzuschließen kann weiterhin ein Kühlmedium, z.B. Natrium, über das nach außen offene Ende des Ventilschaftes in den Hohlraum des Ventilkörpers eingefüllt werden und anschließend dieses Ende des Ventilschaftes verschlossen werden, z.B. durch ein Ventilschaftendstück, welches, etwa mittels Reibschweißen oder einem anderen Schweißverfahren, angebracht wird (in den Figuren nicht dargestellt).

Fig. 2 stellt den Verfahrensschritt des Drückwalzens, das zwischen Fig. 1C und Fig. 1D stattfindet, in einer Schnittdarstellung dar. Hierbei wird in den Hohlraum der Vorform 6 ein Drückwalzdorn 22 eingesetzt. Der Drückwalzdorn rotiert zusammen mit der Vorform 6 und einem Reitstock 28, der die Vorform am Ventilboden abstützt. Weiterhin ist der Drückwalzdorn 22 hier als Drückwalzdorn mit Oberflächenstrukturierung dargestellt, d.h. es handelt sich um einen Strukturierdorn, dessen Umfangsoberfläche beispielhaft mit in Längsrichtung verlaufenden Rillen 30 versehen ist (der Schnitt der Schnittdarstellung verläuft lediglich durch die Vorform 6, nicht durch den Drückwalz-/Strukturierdorn 22). Die Strukturierung der Innenfläche der rohrförmigen Wand 14 findet hier also während des Drückwalzens statt. Wenn die Strukturierung während des Reduzierens des Außendurchmessers der rohrförmigen Wand 14 stattfindet, kann ein Drückwalzdorn ohne Oberflächenstrukturierung, d.h. mit glatter Oberfläche, verwendet werden.

Gegen die rohrförmige Wand 14 werden zwei einander gegenüberliegende Drückwalzen 24, 26 gedrückt, die mittels Reibschluss ebenfalls rotieren. Die Drückwalzen 24, 26 werden relativ zur Vorform in axialer Richtung bewegt, dadurch kommt es zu einer plastischen Verformung der rohrförmigen Wand 14, wobei der äußere Radius der rohrförmigen Wand 14 abnimmt und gleichzeitig die Länge der rohrförmigen Wand 14 zunimmt (in axialer Richtung). Hierbei "fließt" das Material der rohrförmigen Wand 14 in Bewegungsrichtung der Drückwalzen 24, 26 (Gleichlaufdrückwalzen). Die Rotationsrichtungen der Vorform 6 (zusammen mit Drückwalzdorn 22 und Reitstock 28) und der Drückwalzen 24, 26, die Bewegungsrichtung der Drückwalzen 24, 26 und die Fließrichtung des Materials der rohrförmigen Wand 14 sind in der Figur durch Pfeile angedeutet.

In Fig. 2 sind zwei Drückwalzen 24, 26 (teilweise) eingezeichnet, ebenso ist die Verwendung von mehr als zwei Drückwalzen möglich, wobei die Verwendung von zwei oder drei Drückwalzen bevorzugt ist. Mehrere Drückwalzen sind bevorzugt regelmäßig über den Umfang verteilt; d.h. bei zwei Drückwalzen beträgt der Winkel (in Umfangrichtung) zwischen den Drückwalzen in etwa 180°, bei drei Drückwalzen in etwa 120°, usw. Dadurch wird die Vorform insbesondere auch in allen Richtungen abgestützt.

Zwischen den Drückwalzen bestehen ein radialer und ein axialer Versatz, wie in Fig. 2 dargestellt. Radialer Versatz soll heißen, dass der radiale Abstand der Drückwalzen 24, 26 von der Mittelachse unterschiedlich ist. Der axiale Versatz wird erreicht indem die Drückwalzen 24, 26 zeitversetzt verfahren werden, wobei (klarerweise) die Reihenfolge so ist, dass zunächst die Drückwalze mit dem größtem radialen Abstand von der Mittelachse verfahren wird, gefolgt derjenigen mit dem zweitgrößtem radialen Abstand, usw. Auf diese Weise kann das Verfahren beschleunigt werden, da mehrere Radius- bzw. Wanddickenreduzierungsschritte in einem Durchgang erfolgen können. Statt einem radialen Versatz von Drückwalzen gleichen Durchmessers können auch Drückwalzen mit unterschiedlichen Durchmessern Verwendung finden.

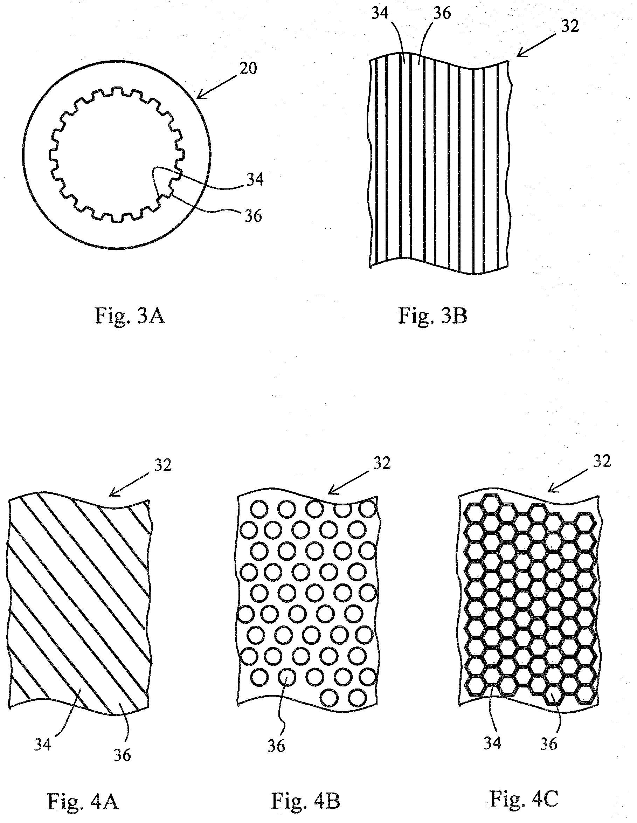

Fig. 3A stellt, in einem Schnitt senkrecht zur Längsrichtung, ein Beispiel für eine Strukturierung der Innenfläche des Ventilschafts 20 (bzw. der rohrförmigen Wand) dar, wobei Erhebungen 34, die parallel zur Längsachse verlaufen, an der Innenfläche des Ventilschafts 20 angeordnet sind, d.h. es handelt sich um Rippen. Zwischen den Erhebungen (Rippen) 34 befinden sich jeweils Vertiefungen 36. Fig. 3B stellt einen Ausschnitt aus einer zugehörigen Abwicklung der mit Rippen versehenen Innenfläche 32 des Ventilschafts dar. Außer in Längsrichtung verlaufenden Rippen sind auch andere Strukturierungsmöglichkeiten möglich; Beispiele sind: schräg verlaufende Rippen (Fig. 4A), in der Aufsicht kreisförmige Vertiefungen, insbesondere kugelabschnittförmige Vertiefungen (ähnlich einem Golfball), (Fig. 4B) und eine wabenförmige Strukturierung mit aneinanderliegenden Waben (Sechsecke) (Fig. 4C); wobei die Figuren 4A-4C jeweils, wie Fig. 3B, einen Ausschnitt aus einer Abwicklung der Innenfläche 32 des jeweiligen Ventilschafts darstellen. In Fig. 4B sind lediglich in die Oberfläche der Innenfläche eingeprägte Vertiefungen 34 zu sehen. Die Strukturierung gemäß Fig. 4A und Fig. 4C umfasst sowohl Erhebungen 34 als auch Vertiefungen 36.

Die zum Erzeugen der Oberflächenstrukturierungen der rohrförmigen Wand 14 bzw. des Ventilschafts 20 gemäß den Figuren 3A-3B und 4A-4C verwendeten Strukturierdorne weisen jeweils eine Oberflächenstrukturierung auf, die zu der in der jeweiligen Figur gezeigten Oberflächenstrukturierung komplementär ist.

Die Oberflächenstrukturierung kann beispielsweise rilliert oder genoppt ausgeführt sein.

### Bezugszeichenliste

- 2: Rohling
- 4: napfförmiges Halbzeug
- 6: Vorform
- 8: Hohlraum
- 10: Bodenabschnitt
- 12: Ventilkopf / Ventilteller
- 14: rohrförmige Wand
- 16: fertiggestellter Ventilkörper für Hohlschaftventil
- 18: fertiggestellter Ventilkörper für Hohltellerventil
- 20: Ventilschaft
- 22: Drückwalzdorn / Strukturierdorn
- 24: Drückwalze
- 26: Drückwalze
- 28: Reitstock
- 30: Rille
- 32: Innenfläche des Ventilschafts mit Strukturierung
- 34: Erhebung
- 36: Vertiefung

## Patentansprüche

1. Verfahren zur Herstellung eines Ventilkörpers (16, 18) eines Hohlventils mit optimierter Schaftinnengeometrie, umfassend die Schritte:
Bereitstellen einer Vorform mit einem Ventilkopf (12) und einer rohrförmigen Wand (14), die einen zylindrischen Hohlraum (8) umgibt;
Drückwalzen der rohrförmigen Wand (14) über einem Dorn, der in den Hohlraum (8) eingesetzt ist, um eine Länge der rohrförmigen Wand (14) zu vergrößern,
wobei beim Drückwalzen mehrere Drückwalzen (24, 26) verwendet werden; **dadurch gekennzeichnet, dass**
als Dorn ein eine Oberflächenstrukturierung aufweisender Strukturierdorn (22) verwendet wird, und
die mehreren Drückwalzen während des Drückwalzens zueinander radial und axial versetzt sind.

2. Verfahren gemäß Anspruch 1, wobei das Bereitstellen der Vorform umfasst:
Bereitstellen eines napfförmigen Halbzeugs (4), wobei das Halbzeug die rohrförmige Wand (14), die den zylindrischen Hohlraum (8) des Halbzeugs umgibt, und einen Bodenabschnitt (10) aufweist; und
Formen des Ventilkopfes (12) aus dem Bodenabschnitt (10).

3. Verfahren gemäß Anspruch 2, wobei das Formen des Ventilkopfes (12) durch Fließpressen oder Schmieden erfolgt.

4. Verfahren gemäß Anspruch 2 oder 3, wobei das Bereitstellen des napfförmigen Halbzeugs (4) umfasst:
Bereitstellen eines zumindest teilweise zylindrischen Rohlings (2); und
Formen des napfförmigen Halbzeugs (4) aus dem Rohling (2).

5. verfahren gemäß Anspruch 4, wobei das Formen des napfförmigen Halbzeugs (4) durch Fließpressen oder Schmieden erfolgt.

6. Verfahren gemäß einem der vorstehenden Ansprüche, wobei beim Drückwalzen drei Drückwalzen verwendet werden.

7. Verfahren gemäß einem der vorstehenden Ansprüche, weiterhin umfassend: Reduzieren eines Außendurchmessers der rohrförmigen Wand (14) ohne Dorn.

8. Verfahren gemäß Anspruch 7, wobei das Reduzieren des Außendurchmessers der rohrförmigen Wand (14) durch Rundkneten oder Einziehen erfolgt.

9. Verfahren gemäß einem der vorstehenden, wobei die Oberflächenstrukturierung des Strukturierdorns in Form von Rillen vorliegt.

10. Verfahren gemäß Anspruch 9, wobei eine Tiefe der Rillen ausgehend vom am Ventilkopf gelegenen Ende des Strukturierdorns in axialer Richtung zunimmt.

11. Verfahren gemäß einem der vorstehenden Ansprüche, wobei die Oberflächenstrukturierung die Oberfläche des Strukturierdorns um 30% bis 100%, bevorzugt 50% bis 70%, gegenüber einer Mantelfläche eines Kreiszylinders mit einem Durchmesser, der einem mittleren Durchmesser des Strukturierdorns gleicht, vergrößert.

12. Verfahren gemäß einem der vorstehenden Ansprüche, wobei die durch die Oberflächenstrukturierung des Strukturierdorns in die rohrförmige Wand eingeprägten Vertiefungen sich bis zu einer Tiefe erstrecken, die 10% bis 30% einer Gesamtwanddicke der rohrförmigen Wand entspricht.

13. Verfahren gemäß einem der vorstehenden Ansprüche, weiterhin umfassend:
Einfüllen eines Kühlmediums, insbesondere Natrium, in den Hohlraum; und
Schließen des Hohlraums.

## Claims

1. A method for producing a valve body (16, 18) of a hollow valve with optimized interior stem geometry, comprising the steps of:
providing a preform with a valve head (12) and a tubular wall (14) surrounding a cylindrical cavity (8);
flow forming the tubular wall (14) over a mandrel, which is inserted into the cavity (8), to enlarge a length of the tubular wall (14),
wherein multiple forming rollers (24, 26) are used during flow forming;
**characterized in that**
a structuring mandrel (22) having a surface structuring is used as mandrel, and
the multiple forming rollers are offset radially and axially to each other during flow forming.

2. The method according to claim 1, wherein the providing of the preform comprises:
providing a bowl-shaped semi-finished product (4), wherein the semi-finished product has the tubular wall (14) surrounding the cylindrical cavity (8) of the semi-finished product and a bottom section (10); and
forming the valve head (12) from the bottom section (10).

3. The method according to claim 2, wherein the forming of the valve head (12) is performed by impact extrusion or forging.

4. The method according to claim 2 or 3, wherein the providing of the bowl-shaped semi-finished product (4) comprises:
providing an at least partially cylindrical blank (2); and
forming the bowl-shaped semi-finished product (4) from the blank (2).

5. The method according to claim 4, wherein the forming of the bowl-shaped semi-finished product (4) is performed by impact extrusion or forging.

6. The method according to any of the preceding claims, wherein three forming rollers are used during flow forming.

7. The method according to any of the preceding claims, further comprising: reducing an outer diameter of the tubular wall (14) without a mandrel.

8. The method according to claim 7, wherein the reducing of the outer diameter of the tubular wall (14) is performed by swaging or necking.

9. The method according to any of the preceding, wherein the surface structuring of the structuring mandrel is present in form of grooves.

10. The method according to claim 9, wherein a depth of the grooves increases in axial direction starting from the end of the structuring mandrel located at the valve head.

11. The method according to one of the preceding claims, wherein the surface structuring enlarges the surface of the structuring mandrel by 30 % to 100 %, preferably 50 % to 70 %, compared to a lateral surface of a circular cylinder with a diameter that is equal to a mean diameter of the structuring mandrel.

12. The method according to one of the preceding claims, wherein the recesses embossed in the tubular wall by the surface structuring of the structuring mandrel extend to a depth corresponding to 10 % to 30 % of a total wall thickness of the tubular wall.

13. The method according to one of the preceding claims, further comprising:
filling a cooling medium, in particular sodium, into the cavity; and
closing the cavity.

## Revendications

1. Procédé de fabrication d'un corps de vanne (16, 18) d'une vanne creuse avec une géométrie d'arbre interne optimisée, comprenant les étapes de :
fourniture d'une préforme avec une tête de soupape (12) et une paroi tubulaire (14) qui entoure une cavité cylindrique (8) ;
filage de la paroi tubulaire (14) sur un mandrin, qui est inséré dans la cavité (8), pour augmenter une longueur de la paroi tubulaire (14),
dans lequel lors du filage une pluralité de rouleaux de pression (24, 26) sont utilisés ;
**caractérisé en ce qu'**
un mandrin de structuration (22) présentant une structuration de surface est utilisé comme mandrin, et
la pluralité de rouleaux de pression sont décalés radialement et axialement les uns par rapport aux autres pendant le filage.

2. Procédé selon la revendication 1, dans lequel la fourniture de la préforme comprend :
la fourniture d'un produit semi-fini en forme de coupe (4), dans lequel le produit semi-fini présente la paroi tubulaire (14), qui entoure la cavité cylindrique (8) du produit semi-fini, et une section inférieure (10); et
le façonnage de la tête de soupape (12) à partir de la section inférieure (10).

3. Procédé selon la revendication 2, dans lequel le façonnage de la tête de soupape (12) a lieu par extrusion ou forgeage.

4. Procédé selon la revendication 2 ou 3, dans lequel la fourniture du produit semi-fini en forme de coupe (4) comprend :
la fourniture d'une ébauche au moins partiellement cylindrique (2) ; et
le façonnage du produit semi-fini en forme de coupe (4) à partir de l'ébauche (2).

5. Procédé selon la revendication 4, dans lequel le façonnage du produit semi-fini en forme de coupe (4) a lieu par extrusion ou forgeage.

6. Procédé selon une quelconque des revendications précédentes, dans lequel lors du filage trois rouleaux de pression sont utilisés.

7. Procédé selon une quelconque des revendications précédentes, comprenant en outre : la réduction d'un diamètre extérieur de la paroi tubulaire (14) sans mandrin.

8. Procédé selon la revendication 7, dans lequel la réduction du diamètre extérieur de la paroi tubulaire (14) s'effectue par rétreint rotatif ou emboutissage.

9. Procédé selon une quelconque des revendications précédentes, dans lequel la structuration de surface du mandrin de structuration se présente sous la forme de rainures.

10. Procédé selon la revendication 9, dans lequel une profondeur des rainures partant de la tête de soupape située à l'extrémité du mandrin de structuration augmente dans le sens axial.

11. Procédé selon une quelconque des revendications précédentes, dans lequel la structuration de surface de la surface du mandrin de structuration augmente de 30 à 100 %, de préférence de 50 à 70 %, par rapport à une surface latérale d'un cylindre circulaire de diamètre, qui est égale à un diamètre moyen du mandrin de structuration.

12. Procédé selon une quelconque des revendications précédentes, dans lequel au moyen de la structuration de surface du mandrin de structuration les évidements gaufrés dans la paroi tubulaire s'étendent jusqu'à une profondeur, qui représente 10 % à 30 % de l'épaisseur de paroi totale de la paroi tubulaire.

13. Procédé selon une quelconque des revendications précédentes, comprenant en outre :
le remplissage d'un fluide de refroidissement, notamment de sodium, dans la cavité ; et
la fermeture de la cavité.
